# EUROPÄISCHE PATENTANMELDUNG

(11) **EP 3 829 227 A1**
(43) Veröffentlichungstag der Anmeldung: **02.06.2021**
(21) Anmeldenummer: 19212123.4
(22) Anmeldetag: 28.11.2019
(51) Int. Cl.: H04W 48/20, H04W 48/12

(54) **VERFAHREN ZUM BETRIEB EINES FUNK-KOMMUNIKATIONSSYSTEMS FÜR EIN INDUSTRIELLES AUTOMATISIERUNGSSYSTEM, FUNK-KOMMUNIKATIONSSYSTEM UND BASISSTATION**

(71) Anmelder: Siemens Aktiengesellschaft, 80333 München (DE)
(72) Erfinder: Sinn, Ulrich, 91056 Erlangen (DE)

(57) **Zusammenfassung**

Zum Betrieb eines Funk-Kommunikationssystems für ein industrielles Automatisierungssystem, das Funk-Kommunikationssystem mehrere Basisstationen (100; AP_1-AP_z) und mehrere Teilnehmerstationen (101-104) umfasst, wird benachbarten Basisstationen ein gemeinsamer, mittels Kanalbündelung gebildeter Funckanal (300, 300a-300c) zur Nutzung zugeordnet. Der Funkkanal umfasst einen Primärkanal (310) und mehrere Sekundärkanäle (321-323). Die benachbarten Basisstationen nutzen den Primärkanal gemeinsam und senden über diesen Kommunikationssteuerungsinformationen (301) an die Teilnehmerstationen. Außerdem werden den benachbarten Basisstationen jeweils unterschiedliche Sekundärkanäle zum Austausch von Nutzdaten (302) mit Teilnehmerstationen zugeordnet. Vor einem Senden von Kommunikationssteuerungsinformationen überprüfen die Basisstationen jeweils, ob der Primärkanal durch benachbarte Basisstationen oder durch Teilnehmerstationen in ihrem Funkabdeckungsbereich belegt ist. Die Basisstationen senden Kommunikationssteuerungsinformationen in Abhängigkeit von einem Belegungszustand des Primärkanals.

## Beschreibung

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 1 867 101 B1 ist ein Kommunikationssystem mit einer Basisstation und mehreren Teilnehmerstationen bekannt, bei dem die Teilnehmerstationen nur auf eine Polling-Nachricht, die von der Basisstation an die jeweilige Teilnehmerstation adressiert ist, Nachrichten an die Basisstation senden. Dabei können die Polling-Nachrichten Datenbereiche umfassen, die für andere Teilnehmerstationen als die jeweils adressierte Teilnehmerstation bestimmt sind. Jede Teilnehmerstation liest daher auch Polling-Nachrichten mit, die nicht direkt an sie adressiert sind. Insbesondere sind in den Polling-Nachrichten von den Teilnehmerstationen auszuführende Steuerungsbefehle angegeben. Ist eine Polling-Nachricht direkt an eine empfangende Teilnehmerstation adressiert, führt diese den jeweiligen Steuerungsbefehle aus und sendet eine Bestätigungsnachricht an die Basisstation zurück. Wenn eine Teilnehmerstation dagegen eine Polling-Nachricht empfängt, die nicht direkt an sie adressiert ist, sondern lediglich einen für sie bestimmten Datenbereich umfasst, führt sie zwar den für sie vorgesehenen Steuerungsbefehl aus, bestätigt dessen Ausführung aber vorerst noch nicht, sondern erst nach Empfang einer direkt an sie adressierten Polling-Nachricht.

In EP 1 427 150 A2 ist ein Verfahren zum Übermitteln von Multimediadaten über ein WLAN beschrieben, bei dem mittels eines als Point Coordination Function (PCF) bezeichneten Medienzugriffsverfahrens eine Nutzung einer vollständigen Übermittlungsperiode durch WLAN Clients ermöglicht wird. Dabei kann die Übermittlungsperiode für Multimediadaten auf Anforderung hinsichtlich ihrer Länge dynamisch allokiert werden. Dabei ist die Anforderung während eines Zeitintervalls zu übermitteln, während dessen keine Medienzugriffskoordination mittels PCF erfolgt. Die Multimediadaten werden dann während eines Zeitintervalls übermittelt, während dessen eine Medienzugriffskoordination mittels PCF erfolgt.

Aus der älteren internationalen Patentanmeldung mit dem Anmeldeaktenzeichen PCT/EP2019/075203 ist ein Funk-Kommunikationssystem bekannt, das zumindest eine Basisstation und mehrere Teilnehmerstationen umfasst. Die Basisstation fragt von den Teilnehmerstationen jeweils zu übermittelnde Datagramme zyklisch zu vorgegebenen Übermittlungszeitpunkten ab. Außerdem gibt die Basisstation für die Teilnehmerstationen innerhalb eines Abfragezyklus die Übermittlungszeitpunkte zum Senden der zu übermittelnden Datagramme vor. Dabei werden die Übermittlungszeitpunkte jeweils aus einem vorangehenden Übermittlungszeitpunkt zuzüglich einer Abfragezyklusdauer und abzüglich einer Wartezeit ermittelt, während der zumindest ein vor dem vorangehenden Übermittlungszeitpunkt zu übermittelndes Datagramm in der jeweiligen Teilnehmerstation bereits fertig zum Senden vorlag. Die Teilnehmerstationen senden Informationen über die jeweilige Wartezeit zur Ermittlung der Übermittlungszeitpunkte an die Basisstation.

Damit Basisstationen in Funk-Kommunikationssystemen durch Teilnehmerstationen erkannt werden können, senden die Basisstation ein Beacon-Signal aus, in WLAN-Systemen üblicherweise alle 100 ms. Bei einem Wechsel einer Teilnehmerstation von einer bisherigen Basisstation bzw. Funkzelle zu einer neuen Basisstation bzw. Funkzelle, ermittelt die Teilnehmerstation im Rahmen eines Roaming-Vorgangs auf bekannten Funkkanälen Beacon-Signale in Funk-Reichweite befindlicher Basisstationen. Dies kann einige hundert Millisekunden in Anspruch nehmen. Für zahlreiche industrielle Mess-, Regelungs- bzw. Steuerungsanwendungen dauert dies zu lange. Vielmehr soll eine Kommunikation von und zu Teilnehmerstation auch während Roaming-Vorgängen möglich sein. Dies ist in üblichen WLAN-Systemen nicht vorgesehen und erfordert erheblichen zusätzlichen Aufwand, beispielsweise zur Bereitstellung redundanter Übertragungswege.

Der vorliegenden Erfindung liegt daher die Aufgabe zugrunde, ein Verfahren zum Betrieb eines Funk-Kommunikationssystems für ein industrielles Automatisierungssystem zu schaffen, das einen beschleunigten Abschluss von Roaming-Vorgängen ermöglicht, ohne dass Teilnehmerstationen hierfür insbesondere ein zweites Funkmodul aufweisen müssen, sowie geeignete Vorrichtungen zur Implementierung des Verfahrens anzugeben.

Diese Aufgabe wird erfindungsgemäß durch ein Verfahren mit den in Anspruch 1 angegebenen Merkmalen, durch ein Funk-Kommunikationssystem mit den in Anspruch 13 angegebenen Merkmalen und durch eine Basisstation mit den in Anspruch 14 angegebenen Merkmalen gelöst. Vorteilhafte Weiterbildungen der vorliegenden Erfindung sind in den abhängigen Ansprüchen angegeben.

Das erfindungsgemäße Verfahren ist zum Betrieb eines Funk-Kommunikationssystems für ein industrielles Automatisierungssystem vorgesehen. Das Funk-Kommunikationssystem, insbesondere WLAN-System, umfasst mehrere Basisstationen und mehrere Teilnehmerstationen. Dabei sind die Basisstationen jeweils einer Gruppe benachbarter Basisstationen zugeordnet. Eine derartige Zuordnung kann beispielsweise im Rahmen einer üblichen Funknetzplanung erfolgen, entweder manuell oder automatisch unterstützt. Benachbarten Basisstationen wird ein gemeinsamer, mittels Kanalbündelung gebildeter Funkkanal zur Nutzung zugeordnet. Dieser Funkkanal umfasst einen Primärkanal und mehrere Sekundärkanäle. Die benachbarten Basisstationen nutzen den Primärkanal gemeinsam und senden über den Primärkanal Kommunikationssteuerungsinformationen an die Teilnehmerstationen.

Vorzugsweise ermitteln die Teilnehmerstationen anhand der Kommunikationssteuerungsinformationen in Bezug auf Basisstationen in ihrem Funkabdeckungsbereich jeweils eine Empfangsfeldstärke. Anhand der ermittelten Empfangsfeldstärken können die Teilnehmerstationen jeweils eine Basisstation bzw. einen Sekundärkanal zum Austausch von Nutzdaten auswählen. Die Basisstationen senden die Kommunikationssteuerungsinformationen vorteilhafterweise als Broadcast an die Teilnehmerstationen. Die Kommunikationssteuerungsinformationen umfassen beispielsweise jeweils eine Basisstationskennung, eine Funknetzkennung, Informationen über Primärkanäle, Informationen über Sekundärkanäle bzw. verwendete Kanäle und Frequenzen.

Erfindungsgemäß werden den benachbarten Basisstationen jeweils unterschiedliche Sekundärkanäle zum Austausch von Nutzdaten mit Teilnehmerstationen in ihrem Funkabdeckungsbereich zugeordnet. Dabei übermitteln die Basisstationen Nutzdaten an die Teilnehmerstationen ausschließlich über den jeweils zugeordneten Sekundärkanal. Somit können auf den Sekundärkanälen keine Kollisionen von Datagrammen von bzw. zu unterschiedlichen Basisstationen auftreten. Die Basisstationen überprüfen jeweils vor einem Senden von Kommunikationssteuerungsinformationen, ob der Primärkanal durch benachbarte Basisstationen oder durch Teilnehmerstationen in ihrem Funkabdeckungsbereich belegt ist. In Abhängigkeit von einem Belegungszustand des Primärkanals senden die Basisstationen Kommunikationssteuerungsinformationen.

Aufgrund einer Übermittlung der Kommunikationssteuerungsinformationen und Nutzdaten über denselben, mittels Kanalbündelung gebildeten Funkkanal benötigen die Teilnehmerstationen zur Durchführung des erfindungsgemäßen Verfahrens nur ein Funkmodul. Ein zweites Funkmodul zur Suche nach verfügbaren alternativen Basisstationen ist nicht erforderlich. Darüber hinaus werden mit dem erfindungsgemäßen Verfahren kollidierende Zugriffe mehrerer Basisstationen auf den Primärkanal effektiv vermieden. Somit lassen sich mit dem erfindungsgemäßen Verfahren aufwandsarm beschleunigte Roaming-Vorgänge realisieren.

Entsprechend einer besonders bevorzugten Ausgestaltung der vorliegenden Erfindung senden die Basisstationen bei einem unbelegten Primärkanal Kommunikationssteuerungsinformationen im Wesentlichen verzögerungsfrei, während sie bei einem belegten Primärkanal nur Nutzdaten senden oder erst nach Ablauf einer spezifizierten Wartezeit Kommunikationssteuerungsinformationen und Nutzdaten senden. Somit können die Kommunikationssteuerungsinformationen einerseits auch bei einem zunächst belegten Primärkanal gemeinsam mit den Nutzdaten zum nächstmöglichen Zeitpunkt gesendet werden. Andererseits können die Nutzdaten bei einem belegten Primärkanal im Wesentlichen verzögerungsfrei auch ohne die Kommunikationssteuerungsinformationen gesendet werden. In diesem Fall werden die Kommunikationssteuerungsinformationen gemeinsam mit nachfolgenden Nutzdaten bei einem späteren Sendevorgang gesendet. Je nach Anwendungsanforderungen kann eine von beiden oben genannten Optionen ausgewählt werden.

Die Basisstationen übermitteln die Kommunikationssteuerungsinformationen und Nutzdaten vorzugsweise mittels Multi-user Downlink-Datagrammen. Dabei verwenden die Basisstationen zum Übermitteln der Multi-user Downlink-Datagramme jeweils nur Resource Units im Primärkanal und im zugeordneten Sekundärkanal. Vorteilhafterweise verwenden die Basisstationen nur Resource Units im zugeordneten Sekundärkanal, wenn nur Nutzdaten zu übermitteln sind. Entsprechend einer weiteren vorteilhaften Ausgestaltung blenden die Basisstationen Resource Units im Primärkanal mittels Preamble Puncturing entsprechend IEEE 802.11 ax aus, wenn nur Nutzdaten zu übermitteln sind. Insgesamt können die Teilnehmerstationen beim Empfangen der Multi-user Downlink-Datagramme also Resource Units im Primärkanal und im einer jeweils ausgewählten Basisstation zugeordneten Sekundärkanal verwenden. Somit können die Teilnehmerstationen sämtliche Kommunikationssteuerungsinformationen der benachbarten Basisstationen empfangen.

Entsprechend einer weiteren Ausgestaltung der vorliegenden Erfindung fragen die Basisstationen für ausgewählte Teilnehmerstationen oder für jede Teilnehmerstation einzeln die jeweils zu übermittelnden Datagramme zu individuellen Übermittlungszeitpunkten je Teilnehmerstation entsprechend einer durch die jeweilige Basisstation vorgegebenen Stationsreihenfolge ab. Außerdem können jeweils mehrere Teilnehmerstationen einer Stationsgruppe zugeordnet sein. In diesem Fall fragen die Basisstationen für Stationsgruppen die jeweils zu übermittelnden Datagramme zu individuellen Übermittlungszeitpunkten je Stationsgruppe entsprechend einer durch die jeweilige Basisstation vorgegebenen Gruppen- bzw. Stationsreihenfolge ab. Mit obigen Optionen lässt sich ein deterministischer Funkkanalzugriff für die Teilnehmerstationen bzw. Gruppen von Teilnehmerstationen realisieren.

Das erfindungsgemäße Funk-Kommunikationssystem ist zur Durchführung eines Verfahrens entsprechend vorangehenden Ausführungen vorgesehen und umfasst zumindest eine Basisstation und mehrere Teilnehmerstationen. Die Basisstationen sind jeweils einer Gruppe benachbarter Basisstationen zugeordnet und dafür ausgestaltet und eingerichtet, mit benachbarten Basisstationen einem gemeinsamen, mittels Kanalbündelung gebildetem Funkkanal zur Nutzung zugeordnet zu werden. Dabei umfasst der Funkkanal einen Primärkanal und mehrere Sekundärkanäle. Außerdem sind die Basisstationen dafür ausgestaltet und eingerichtet, den Primärkanal mit den benachbarten Basisstationen gemeinsam zu nutzen und über den Primärkanal Kommunikationssteuerungsinformationen an die Teilnehmerstationen zu senden.

Darüber hinaus sind die Basisstationen erfindungsgemäß dafür ausgestaltet und eingerichtet, in Bezug auf die benachbarten Basisstationen jeweils unterschiedlichen Sekundärkanälen zum Austausch von Nutzdaten mit Teilnehmerstationen zugeordnet zu werden und Nutzdaten an die Teilnehmerstationen ausschließlich über den jeweils zugeordneten Sekundärkanal zu übermitteln. Des Weiteren sind die Basisstationen dafür ausgestaltet und eingerichtet, vor einem Senden von Kommunikationssteuerungsinformationen jeweils zu überprüfen, ob der Primärkanal durch benachbarte Basisstationen oder durch Teilnehmerstationen belegt ist. Dementsprechend sind die Basisstationen dafür ausgestaltet und eingerichtet, Kommunikationssteuerungsinformationen in Abhängigkeit von einem Belegungszustand des Primärkanals zu senden.

Die erfindungsgemäße Basisstation ist zur Durchführung eines Verfahrens entsprechend vorangehenden Ausführungen vorgesehen und dafür ausgestaltet und eingerichtet, mit benachbarten Basisstationen einem gemeinsamen, mittels Kanalbündelung gebildetem Funkkanal zur Nutzung zugeordnet zu werden. Dabei umfasst der Funkkanal einen Primärkanal und mehrere Sekundärkanäle. Außerdem ist die Basisstation dafür ausgestaltet und eingerichtet, den Primärkanal mit den benachbarten Basisstationen gemeinsam zu nutzen und über den Primärkanal Kommunikationssteuerungsinformationen an Teilnehmerstationen zu senden.

Ferner ist die erfindungsgemäße Basisstation dafür ausgestaltet und eingerichtet, in Bezug auf die benachbarten Basisstationen jeweils einem unterschiedlichen Sekundärkanal zum Austausch von Nutzdaten mit Teilnehmerstationen zugeordnet zu werden und Nutzdaten an die Teilnehmerstationen ausschließlich über den zugeordneten Sekundärkanal zu übermitteln. Darüber hinaus ist die Basisstation dafür ausgestaltet und eingerichtet, vor einem Senden von Kommunikationssteuerungsinformationen jeweils zu überprüfen, ob der Primärkanal durch benachbarte Basisstationen oder durch Teilnehmerstationen belegt ist, und Kommunikationssteuerungsinformationen in Abhängigkeit von einem Belegungszustand des Primärkanals zu senden.

Die vorliegende Erfindung wird nachfolgend an einem Ausführungsbeispiel anhand der Zeichnung näher erläutert. Es zeigt
- Figur 1: eine Funkzelle eines Funk-Kommunikationssystems für ein industrielles Automatisierungssystem mit einem WLAN Access Point und mehreren WLAN Clients,
- Figur 2: eine schematische Darstellung eines Funk-Kommunikationssystems mit mehreren Funkzellen, die jeweils zumindest einer Basisstation zugeordnet sind,
- Figur 3: eine schematische Darstellung eines durch mehrere Basisstationen genutzten, mittels Kanalbündelung gebildeten Funkkanals.

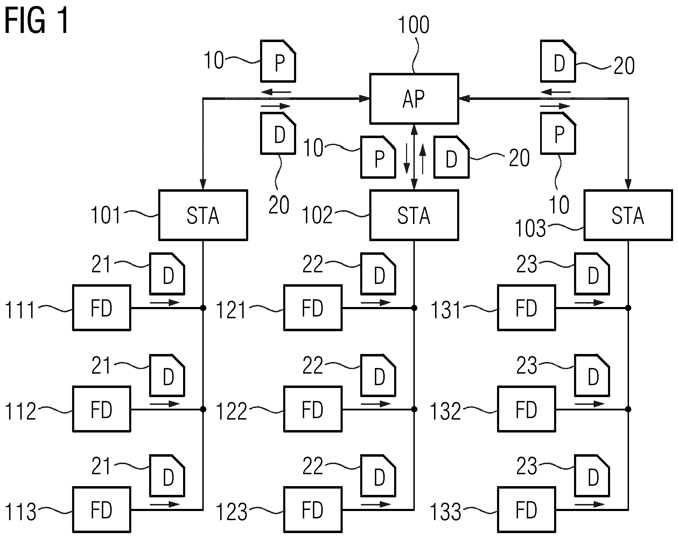

Die in Figur 1 dargestellte Funkzelle eines Funk-Kommunikationssystems umfasst einen WLAN Access Point 100 als Basisstation und mehrere drahtlos mit diesem verbindbare WLAN Clients 101-103 als Teilnehmerstationen. An die WLAN Clients 101-103 sind im vorliegenden Ausführungsbeispiel jeweils mehrere Automatisierungs- bzw. Feldgeräte 111-113, 121-123, 131-133 eines industriellen Automatisierungssystems angeschlossen. Zu Automatisierungsgeräten zählen insbesondere speicherprogrammierbare Steuerungen, Eingabe/Ausgabe-Einheiten (I/O-Module) oder Bedien- und Beobachtungsstationen des industriellen Automatisierungssystems.

Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung und einem mit der speicherprogrammierbaren Steuerung verbundenen Sensor bzw. einer gesteuerten Maschine oder Anlage. Ein Sensor bzw. eine Maschine oder Anlage kann grundsätzlich auch über das Funk-Kommunikationssystem mit einer speicherprogrammierbaren Steuerung verbunden werden. Die Zentraleinheit einer speicherprogrammierbaren Steuerung ist insbesondere für eine Ermittlung geeigneter Steuerungsgrößen aus erfassten Messgrößen vorgesehen. Obige Komponenten einer speicherprogrammierbaren Steuerung können beispielsweise über ein Rückwandbus-System miteinander verbunden werden.

Eine Bedien- und Beobachtungsstation dient insbesondere zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Insbesondere sind der WLAN Access Point 100 einerseits und die WLAN Clients 101-103 andererseits dafür ausgestaltet und eingerichtet, miteinander Datenrahmen 10, 20 auszutauschen. Die Datenrahmen 10, 20 umfassen im vorliegenden Ausführungsbeispiel einerseits Polling-Nachrichten 10 und andererseits mittels der Polling-Nachrichten 10 durch den WLAN Access Point 100 von den WLAN Clients 101-103 abgefragte Steuerungsdaten 20, insbesondere Prozessdaten bzw. Mess- und Steuerungsgrößen, die mit den WLAN Clients 101-103 verbundenen Steuerungen, Aktoren, Sensoren, Maschinen oder Anlagen zugeordnet sind.

Grundsätzlich kann der WLAN Access Point 100 für ausgewählte WLAN Clients oder für jeden WLAN Client 101-103 einzeln die jeweils zu übermittelnden Steuerungsdaten 20 zu individuellen Übermittlungszeitpunkten je WLAN Client entsprechend einer durch den WLAN Access Point 100 vorgegebenen Stationsreihenfolge abfragen. Alternativ oder zusätzlich hierzu können jeweils mehrere WLAN Clients zu einer Stationsgruppe zugeordnet sein. In diesem Fall fragt der WLAN Access Point 100 für Stationsgruppen die jeweils zu übermittelnden Steuerungsdaten 20 zu individuellen Übermittlungszeitpunkten je Stationsgruppe entsprechend einer durch den WLAN Access Point 100 vorgegebenen Gruppen- bzw. Stationsreihenfolge ab.

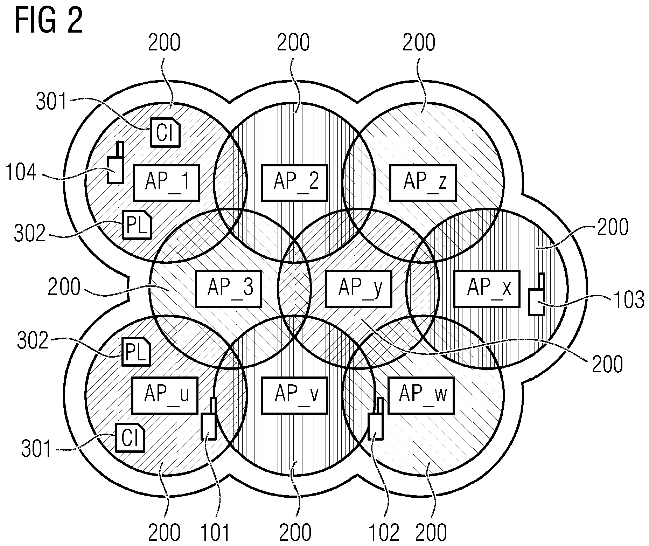

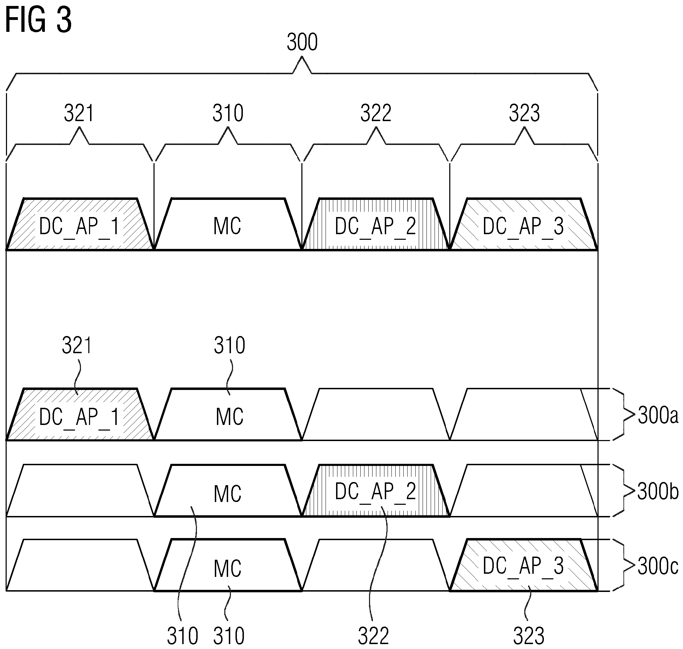

Das in Figur 2 dargestellte Funk-Kommunikationssystem umfasst mehrere WLAN Access Points AP_1-AP_z und mehrere WLAN Clients 101-104. Dabei sind die WLAN Access Points AP_1-AP_z einerseits jeweils einer Funkzelle 200 und andererseits jeweils einer Gruppe benachbarter WLAN Access Points AP_1-AP_3, AP_u-AP_w, AP_x-AP_z zugeordnet. Benachbarten WLAN Access Points AP_1-AP_3, AP_u-AP_w, AP_x-AP_z wird ein gemeinsamer, mittels Kanalbündelung gebildeter Funkkanal 300 zur Nutzung zugeordnet, der entsprechend Figur 3 einen Primärkanal 310 und mehrere Sekundärkanäle 321-323 umfasst. Der Primärkanal 310 und die Sekundärkanäle 321-323 sind also Sub-Kanäle des Funkkanals 300. Die benachbarten WLAN Access Points AP_1-AP_3, AP_u-AP_w, AP_x-AP_z nutzen den Primärkanal 310 gemeinsam und senden über den Primärkanal 310 Kommunikationssteuerungsinformationen 301 an die WLAN Clients 101-104. Die Kommunikationssteuerungsinformationen umfassen beispielsweise jeweils eine Basisstationskennung, eine Funknetzkennung, insbesondere SSID, Informationen über Primärkanäle, Informationen über Sekundärkanäle bzw. verwendete Kanäle und Frequenzen.

Im vorliegenden Ausführungsbeispiel senden die WLAN Access Points AP_1-AP_3, AP_u-AP_w, AP_x-AP_z die Kommunikationssteuerungsinformationen 301 als Broadcast an die WLAN Clients 101-104. Die WLAN Clients 101-104 ermitteln anhand der Kommunikationssteuerungsinformationen 301 in Bezug auf WLAN Access Points AP_1-AP_3, AP_u-AP_w, AP_x-AP_z in ihrem Funkabdeckungsbereich jeweils eine Empfangsfeldstärke (RSSI). Anhand der ermittelten Empfangsfeldstärken wählen die WLAN Clients 101-104 jeweils einen WLAN Access Point AP_1-AP_3, AP_u-AP_w, AP_x-AP_z bzw. einen Sekundärkanal 321-323 zum Austausch von Nutzdaten 302 aus.

Den benachbarten WLAN Access Points AP_1-AP_3, AP_u-AP_w, AP_x-AP_z werden jeweils unterschiedliche Sekundärkanäle 321-323 zum Austausch von Nutzdaten 302 mit Teilnehmerstationen 101-104 in ihrer jeweiligen Funkzelle 200 zugeordnet. Dabei übermitteln die WLAN Access Points AP_1-AP_3, AP_u-AP_w, AP_x-AP_z Nutzdaten 302 an die WLAN Clients 101-104 ausschließlich über den jeweils zugeordneten Sekundärkanal 321-323. Beispielsweise nutzt ein erster WLAN Access Point AP_1 innerhalb einer Gruppe benachbarter WLAN Access Points AP_1-AP_3 im gemeinsamen Funkkanal 300a neben dem Primärkanal 310 nur einen ersten Sekundärkanal 321. In entsprechender Weise nutzen ein zweiter WLAN Access Point AP_2 und ein dritter WLAN Access Point AP_3 innerhalb dieser Gruppe im gemeinsamen Funkkanal 300b, 300c neben dem Primärkanal 310 nur einen zweiten Sekundärkanal 322 bzw. nur einen dritten Sekundärkanal 323.

Im vorliegenden Ausführungsbeispiel übermitteln die WLAN Access Points AP_1-AP_3, AP_u-AP_w, AP_x-AP_z die Kommunikationssteuerungsinformationen 301 und Nutzdaten 302 mittels Multi-user Downlink-Datagrammen (MU DL) entsprechend Multi-user Orthogonal Frequency Division Multiple Access (MU OFDMA) gemäß IEEE 802.11 ax. Beispielsweise kann als gemeinsamer Funckanal 300 ein 80 MHz breiter Kanal verwendet werden, der durch Bündeln von vier 20 MHz breiten Kanälen entsteht. Von diesen vier Kanälen wird ein Kanal als Primarkanal 310 genutzt, während die anderen drei Kanäle als Sekundär-Kanäle 321-323 genutzt werden. Grundsätzlich lassen sich auch breitere Kanäle, etwa mit 160 MHz breite, als gemeinsamer Funkkanal oder anderen Kanalbreiten für den Primärkanal 310 und die Sekundärkanäle 321-323 verwenden. Insgesamt verwenden die WLAN Access Points AP_1-AP_3, AP_u-AP_w, AP_x-AP_z zum Übermitteln der Multi-user Downlink-Datagramme jeweils nur Resource Units (RU) im Primärkanal 310 und im zugeordneten Sekundärkanal 321-323.

Wenn nur Nutzdaten 302 zu übermitteln sind, verwenden die WLAN Access Points AP_1-AP_3, AP_u-AP_w, AP_x-AP_z nur Resource Units im zugeordneten Sekundärkanal 321-323. Vorzugsweise blenden die WLAN Access Points AP_1-AP_3, AP_u-AP_w, AP_x-AP_z Resource Units im Primärkanal 301 mittels Preamble Puncturing entsprechend IEEE 802.11 ax aus, wenn nur Nutzdaten 302 zu übermitteln sind. Beim Empfangen der Multi-user Downlink-Datagramme verwenden die WLAN Clients 101-104 Resource Units im Primärkanal 310 und im Sekundärkanal 321-323, welcher dem jeweils ausgewählten WLAN Access Point AP_1-AP_3, AP_u-AP_w, AP_x-AP_z zugeordnet ist. Auf diese Weise empfangen die WLAN Clients 101-104 sämtliche Kommunikationssteuerungsinformationen 301 aller benachbarten, derselben Gruppe zugeordneten WLAN Access Points AP_1-AP_3, AP_u-AP_w, AP_x-AP_z.

Vor einem Senden von Kommunikationssteuerungsinformationen 301 überprüfen die WLAN Access Points AP_1-AP_3, AP_u-AP_w, AP_x-AP_z jeweils, ob der Primärkanal 310 durch benachbarte WLAN Access Points AP_1-AP_3, AP_u-AP_w, AP_x-AP_z oder durch WLAN Clients 101-104 in ihrer Funkzelle belegt ist. In Abhängigkeit von einem Belegungszustand des Primärkanals 310 senden die WLAN Access Points AP_1-AP_3, AP_u-AP_w, AP_x-AP_z Kommunikationssteuerungsinformationen 301. Bei einem unbelegtem Primärkanal 310 senden die WLAN Access Points AP_1-AP_3, AP_u-AP_w, AP_x-AP_z Kommunikationssteuerungsinformationen 301 im Wesentlichen verzögerungsfrei.

Entsprechend einer ersten Option senden die WLAN Access Points AP_1-AP_3, AP_u-AP_w, AP_x-AP_z bei einem belegten Primärkanal 310 nur Nutzdaten 302. In diesem Fall werden die Nutzdaten 302 im Wesentlichen verzögerungsfrei ohne die Kommunikationssteuerungsinformationen 301 gesendet. Die Kommunikationssteuerungsinformationen 301 werden dann gemeinsam mit nachfolgenden Nutzdaten 302 bei einem späteren Sendevorgang gesendet. Dagegen werden die Kommunikationssteuerungsinformationen 301 entsprechend einer zweiten Option bei einem belegten Primärkanal 310 nach Ablauf einer spezifizierten Wartezeit gemeinsam mit den Nutzdaten 302 gesendet. Für zahlreiche Anwendungsanforderungen ist eine derartige Wartezeit tolerabel. Somit kann je nach Anwendungsanforderungen eine von beiden Optionen ausgewählt werden.

## Patentansprüche

1. Verfahren zum Betrieb eines Funk-Kommunikationssystems für ein industrielles Automatisierungssystem, bei dem
- das Funk-Kommunikationssystem mehrere Basisstationen (100; AP_1-AP_z) und mehrere Teilnehmerstationen (101-104) umfasst, wobei die Basisstationen jeweils einer Gruppe benachbarter Basisstationen zugeordnet sind,
- benachbarten Basisstationen ein gemeinsamer, mittels Kanalbündelung gebildeter Funkkanal (300, 300a-300c) zur Nutzung zugeordnet wird, wobei der Funkkanal einen Primärkanal (310) und mehrere Sekundärkanäle (321-323) umfasst,
- die benachbarten Basisstationen den Primärkanal gemeinsam nutzen und über den Primärkanal Kommunikationssteuerungsinformationen (301) an die Teilnehmerstationen senden,
- den benachbarten Basisstationen jeweils unterschiedliche Sekundärkanäle zum Austausch von Nutzdaten (302) mit Teilnehmerstationen in ihrem Funkabdeckungsbereich (200) zugeordnet werden,
- die Basisstationen Nutzdaten an die Teilnehmerstationen ausschließlich über den jeweils zugeordneten Sekundärkanal übermitteln,
- die Basisstationen vor einem Senden von Kommunikationssteuerungsinformationen jeweils überprüfen, ob der Primärkanal durch benachbarte Basisstationen oder durch Teilnehmerstationen in ihrem Funkabdeckungsbereich belegt ist,
- die Basisstationen Kommunikationssteuerungsinformationen in Abhängigkeit von einem Belegungszustand des Primärkanals senden.

2. Verfahren nach Anspruch 1,
bei dem die Basisstationen bei einem unbelegten Primärkanal Kommunikationssteuerungsinformationen im Wesentlichen verzögerungsfrei senden und bei dem die Basisstationen bei einem belegten Primärkanal nur Nutzdaten senden oder erst nach Ablauf einer spezifizierten Wartezeit Kommunikationssteuerungsinformationen und Nutzdaten senden.

3. Verfahren nach einem der Ansprüche 1 oder 2,
bei dem die Kommunikationssteuerungsinformationen jeweils eine Basisstationskennung, eine Funknetzkennung, Informationen über Primärkanäle und/oder Informationen über Sekundärkanäle umfassen.

4. Verfahren nach einem der Ansprüche 1 bis 3,
bei dem die Teilnehmerstationen anhand der Kommunikationssteuerungsinformationen in Bezug auf Basisstationen in ihrem Funkabdeckungsbereich jeweils eine Empfangsfeldstärke ermitteln.

5. Verfahren nach Anspruch 4,
bei dem die Teilnehmerstationen anhand der ermittelten Empfangsfeldstärken jeweils eine Basisstation und/oder einen Sekundärkanal zum Austausch von Nutzdaten auswählen.

6. Verfahren nach einem der Ansprüche 1 bis 5,
bei dem die Basisstationen die Kommunikationssteuerungsinformationen als Broadcast an die Teilnehmerstationen senden.

7. Verfahren nach einem der Ansprüche 1 bis 6,
bei dem die Basisstationen die Kommunikationssteuerungsinformationen und Nutzdaten mittels Multi-user Downlink-Datagrammen übermitteln und bei dem die Basisstationen zum Übermitteln der Multi-user Downlink-Datagramme jeweils nur Resource Units im Primärkanal und im zugeordneten Sekundärkanal verwenden.

8. Verfahren nach Anspruch 7,
bei dem die Basisstationen nur Resource Units im zugeordneten Sekundärkanal verwenden, wenn nur Nutzdaten zu übermitteln sind.

9. Verfahren nach einem der Ansprüche 7 oder 8,
bei dem die Basisstationen Resource Units im Primärkanal mittels Preamble Puncturing entsprechend IEEE 802.11 ax ausblenden, wenn nur Nutzdaten zu übermitteln sind.

10. Verfahren nach einem der Ansprüche 7 bis 9,
bei dem die Teilnehmerstationen beim Empfangen der Multi-user Downlink-Datagramme Resource Units im Primärkanal und im einer jeweils ausgewählten Basisstation zugeordneten Sekundärkanal verwenden und bei dem die Teilnehmerstationen sämtliche Kommunikationssteuerungsinformationen der benachbarten Basisstationen empfangen.

11. Verfahren nach einem der Ansprüche 1 bis 10,
bei dem die Basisstationen für ausgewählte Teilnehmerstationen oder für jede Teilnehmerstation einzeln die jeweils zu übermittelnden Datagramme zu individuellen Übermittlungszeitpunkten je Teilnehmerstation entsprechend einer durch die jeweilige Basisstation vorgegebenen Stationsreihenfolge abfragen.

12. Verfahren nach einem der Ansprüche 1 bis 11,
bei dem jeweils mehrere Teilnehmerstationen zu einer Stationsgruppe zugeordnet sind und bei dem die Basisstationen für Stationsgruppen die jeweils zu übermittelnden Datagramme zu individuellen Übermittlungszeitpunkten je Stationsgruppe entsprechend einer durch die jeweilige Basisstation vorgegebenen Gruppen- und/oder Stationsreihenfolge abfragen.

13. Funk-Kommunikationssystem zur Durchführung eines Verfahrens nach einem der Ansprüche 1 bis 12, wobei
- das Funk-Kommunikationssystem mehrere Basisstationen und mehrere Teilnehmerstationen umfasst, wobei die Basisstationen jeweils einer Gruppe benachbarter Basisstationen zugeordnet sind,
- die Basisstationen dafür ausgestaltet und eingerichtet sind, mit benachbarten Basisstationen einem gemeinsamen, mittels Kanalbündelung gebildetem Funkkanal zur Nutzung zugeordnet zu werden, wobei der Funkkanal einen Primärkanal und mehrere Sekundärkanäle umfasst,
- die Basisstationen dafür ausgestaltet und eingerichtet sind, den Primärkanal mit den benachbarten Basisstationen gemeinsam zu nutzen und über den Primärkanal Kommunikationssteuerungsinformationen an die Teilnehmerstationen zu senden,
- die Basisstationen dafür ausgestaltet und eingerichtet sind, in Bezug auf die benachbarten Basisstationen jeweils unterschiedlichen Sekundärkanälen zum Austausch von Nutzdaten mit Teilnehmerstationen zugeordnet zu werden,
- die Basisstationen dafür ausgestaltet und eingerichtet sind, Nutzdaten an die Teilnehmerstationen ausschließlich über den jeweils zugeordneten Sekundärkanal zu übermitteln,
- die Basisstationen dafür ausgestaltet und eingerichtet sind, vor einem Senden von Kommunikationssteuerungsinformationen jeweils zu überprüfen, ob der Primärkanal durch benachbarte Basisstationen oder durch Teilnehmerstationen belegt ist,
- die Basisstationen dafür ausgestaltet und eingerichtet sind, Kommunikationssteuerungsinformationen in Abhängigkeit von einem Belegungszustand des Primärkanals zu senden.

14. Basisstation zur Durchführung eines Verfahrens nach einem der Ansprüche 1 bis 12, wobei
- die Basisstation dafür ausgestaltet und eingerichtet ist, mit benachbarten Basisstationen einem gemeinsamen, mittels Kanalbündelung gebildetem Funkkanal zur Nutzung zugeordnet zu werden, wobei der Funkkanal einen Primärkanal und mehrere Sekundärkanäle umfasst,
- die Basisstation dafür ausgestaltet und eingerichtet ist, den Primärkanal mit den benachbarten Basisstationen gemeinsam zu nutzen und über den Primärkanal Kommunikationssteuerungsinformationen an Teilnehmerstationen zu senden,
- die Basisstation dafür ausgestaltet und eingerichtet ist, in Bezug auf die benachbarten Basisstationen jeweils einem unterschiedlichen Sekundärkanal zum Austausch von Nutzdaten mit Teilnehmerstationen zugeordnet zu werden,
- die Basisstation dafür ausgestaltet und eingerichtet ist, Nutzdaten an die Teilnehmerstationen ausschließlich über den zugeordneten Sekundärkanal zu übermitteln,
- die Basisstation dafür ausgestaltet und eingerichtet ist, vor einem Senden von Kommunikationssteuerungsinformationen jeweils zu überprüfen, ob der Primärkanal durch benachbarte Basisstationen oder durch Teilnehmerstationen belegt ist,
- die Basisstation dafür ausgestaltet und eingerichtet ist, Kommunikationssteuerungsinformationen in Abhängigkeit von einem Belegungszustand des Primärkanals zu senden.
